# EUROPEAN PATENT APPLICATION

(11) **EP 4 691 597 A1**
(43) Date of publication of application: **11.02.2026**
(21) Application number: 23930602.0
(22) Date of filing: 30.03.2023
(51) Int. Cl.: B01D 53/04, B01D 53/40, B01J 20/28

(54) **REACTOR AND GAS RECOVERY DEVICE**

(71) Applicant: NGK INSULATORS, LTD., Nagoya-shi, Aichi 4678530 (JP)
(72) Inventor: WADA,Takuya, Nagoya-shi, Aichi 467-8530 (JP); MURAKAMI, Keiya, Nagoya-shi, Aichi 467-8530 (JP); TOYOSHIMA, Hideyuki, Nagoya-shi, Aichi 467-8530 (JP)
(74) Representative: MERH-IP Matias Erny Reichl Hoffmann Patentanwälte PartG mbB
(86) International application number: PCT/JP2023/013436
(87) International publication number: WO 2024/201966

(57) **Abstract**

A reactor including at least one honeycomb structure 10 having an outer peripheral wall 11 and partition walls 15 provided on an inner side of the outer peripheral wall 11, the partition walls defining a plurality of cells 14 through which a process gas containing a capturing target gas can flow, each of the cells 14 extending from an inflow end face to an outflow end face of the honeycomb structure 10. The honeycomb structure 10 has at least one communication pore group P composed of a plurality of communication pores Px provided at the outer peripheral wall 11 and the partition walls 15 so as to be positioned on one straight line L1 orthogonal to an extending direction of the cells 14. The communication pore group P is located closer to the outflow end face 13 side than a center C1 in the extending direction of the cells.

## Description

### FIELD OF THE INVENTION

This invention relates to a reactor and a gas recovery device.

### BACKGROUND OF THE INVENTION

As a measure against global warming, there is a growing demand for the effective use of CO₂, including the recovery of CO₂ from factory exhaust gases, and combustion exhaust gases of CO₂ emission sources such as thermal power plants, and direct CO₂ recovery (direct air capture: DAC) and fixation from the atmosphere, as well as methanation of recovered CO₂.

The proposed main method for recovering CO₂ is to adsorb CO₂ onto an adsorbent capable of adsorbing CO₂, desorb the CO₂ by changing a temperature, pressure, humidity, and the like, recover it as highly concentrated CO₂, and use it as a raw material for the chemical industry, or to inject it into the underground and fix it. The adsorbent is supported on porous pellets, porous particles, fiber filters, and honeycomb structures and used (e.g., Non-Patent Literature 1).

### PRIOR ART

### Non-Patent Literature

[Non-Patent Literature 1] "Cost and Evaluation of Direct Air Capture (DAC) Method for Carbon Dioxide (Vol. 2) - Adsorption Separation Process -", Center for Low Carbon Society Strategy, Japan Science and Technology Agency, March 2021.

### SUMMARY OF THE INVENTION

### Problem to be Solved by the Invention

Non-Patent Literature 1 describes a reactor in which an adsorbent is supported (an adsorbent layer is formed) on each surface of partition walls of a honeycomb structure made of a mullite material, with a thickness of partition walls of 0.15 mm, a cell density of 400 cells/inch² (62 cells/cm²) and an opening ratio of 75.0%.

However, in a honeycomb structure having such a simple structure, in a cross section orthogonal to an extending direction of cells, a gas containing CO₂ flows easily through the cells in the central region (i.e., a flow rate of the gas flowing through the cells in the central region is higher), while it is difficult to flow through the cells in the peripheral region (i.e., the flow rate of the gas flowing through the cells in the peripheral region is lower). Therefore, a recovery rate of CO₂ and an amount of CO₂ recovered by the adsorbent supported on the partition walls that define the cells in the peripheral region are lower than the recovery rate of CO₂ and amount of CO₂ recovered by the adsorbent supported on the partition walls that define the cells in the central region. In addition, the adsorbent gradually deteriorates as a result of repeated adsorption and desorption of CO₂, and the adsorbent supported on the partition walls that define the cells in the central region deteriorates more rapidly than the adsorbent supported on the partition walls that define the cells in the peripheral region, resulting in a shorter lifespan as a reactor.

The above phenomenon becomes problematic particularly when the diameter of the honeycomb structure is increased, or in a reactor in which a plurality of honeycomb structures are arranged in a direction orthogonal to the extending direction of the cells of each of the honeycomb structures.

Although the case of the reactor in which the trapping target gas is CO₂ and the adsorbent capable of adsorbing CO₂ is used is described as an example, the same problem as described above may occur for a reactor in which the capturing target gas is a gas other than CO₂ and a functional material other than the adsorbent capable of adsorbing CO₂ is used.

This invention was made to solve the above problems, and an object of this invention is to provide a reactor and a gas recovery device that allows the processing gas containing the capturing target gas to easily flow through the cells in the outer periphery, can increase an amount of a capturing target gas recovered, and can extend the lifespan.

### Means for Solving the Problem

As results of intensive studies for reactors including honeycomb structures, the inventors have found that the above problems can be solved by providing at least one communication pore group at a specific position of the honeycomb structure, and they have completed this invention. In other words, this invention is exemplified as follows:
<1> A reactor comprising at least one honeycomb structure having an outer peripheral wall and partition walls provided on an inner side of the outer peripheral wall, the partition walls defining a plurality of cells through which a process gas containing a capturing target gas can flow, each of the cells extending from an inflow end face to an outflow end face of the honeycomb structure,
   wherein the honeycomb structure has at least one communication pore group comprising a plurality of communication pores provided at the outer peripheral wall and the partition walls so as to be positioned on one straight line orthogonal to an extending direction of the cells, and
   wherein the communication pore group is located closer to the outflow end face side than a center in the extending direction of the cells.
<2> The reactor according to <1>, wherein, in a cross section of the honeycomb structure orthogonal to the extending direction of the cells, the communication pores of the communication pore group are provided so that the one straight line orthogonal to the extending direction of the cells passes through the center of the honeycomb structure.
<3> The reactor according to <1> or <2>, wherein the honeycomb structure has two or more communication pore groups,
   wherein a diameter of each of the communication pores of the communication pore group closest to the outflow end face is larger than that of each of the communication pores of the communication pore group closest to the inflow end face.
<4> The reactor according to any one of <1> to <3>, wherein the honeycomb structure has three or more communication pore groups,
   wherein a diameter of each of the communication pores of the communication pore group closest to the inflow end face is smaller than that of each of the communication pores of the other communication pore groups, and
   wherein a diameter of each of the communication pores of the communication pore group closest to the outflow end face is larger than that of each of the communication pores of the other communication pore groups.
<5> The reactor according to <3>, wherein the reactor satisfies the relationship: S2 / S1 ≤ 10 × D2 / D1, in which D1 is a distance between a center of the communication pore of the communication pore group closest to the inflow end face and the inflow end face, S1 is a cross-sectional area of the communication pore of the communication pore group closest to the inflow end face, D2 is a distance between a center of the communication pore of the communication pore group closest to the outflow end face and the inflow end face, and S2 is a cross-sectional area of the communication pore of the communication pore group closest to the outflow end face.
<6> The reactor according to <4>, wherein the reactor satisfies the relationship: S2 / S1 ≤ 10 × D2 / D1, in which D1 is a distance between a center of the communication pore of the communication pore group closest to the inflow end face and the inflow end face, S1 is a cross-sectional area of the communication pore of the communication pore group closest to the inflow end face, D2 is a distance between a center of the communication pore of the communication pore group closest to the outflow end face and the inflow end face, and S2 is a cross-sectional area of the communication pore of the communication pore group closest to the outflow end face.
<7> The reactor according to according to any one of <1> to <6>, wherein the reactor comprises two or more of the honeycomb structure,
   wherein the honeycomb structures are provided so that the outer peripheral walls parallel to an extending direction of the cells face each other, and
   wherein the communication pores of the communication pore group in the two or more of the honeycomb structure are located on the one straight line orthogonal to an extending direction of the cells.
<8> The reactor according to any one of <1> to <7>, wherein the honeycomb structure has a rectangular pillar shape.
<9> The reactor according to any one of <1> to <8>, wherein each of the cells has a quadrangular or hexagonal shape in a cross section of the honeycomb structure orthogonal to an extending direction of the cells.
<10> The reactor according to any one of <1> to <9>, wherein the honeycomb structure comprises at least one selected from cordierite, mullite, alumina, silicon carbide, and Si-bonded silicon carbide as a main component.
<11> The reactor according to any one of <1> to <10>, wherein the partition walls have a thickness of 0.05 mm to 5 mm.
<12> The reactor according to any one of <1> to <11>, wherein the partition walls have a porosity of 30% or more and less than 80%.
<13> The reactor according to any one of <1> to <12>, wherein the partition walls have an average pore diameter of 10 µm to 300 µm.
<14> The reactor according to any one of <1> to <13>, further comprising a functional material supported on the partition walls.
<15> The reactor according to <14>, wherein the functional material is an amine compound and/or a metal organic framework.
<16> The reactor according to any one of <1> to <15>, further comprising a cylindrical member that accommodates the honeycomb structure.
<17> A gas recovery device for adsorbing and releasing a capturing target gas contained in a process gas, the gas recovery device comprising:
   the reactor according to any one of <1> to <16>;
   a heater configured to heat the reactor;
   a gas feed pipe configured to feed the process gas or a purge gas to an inflow port of the reactor; and
   a gas discharge pipe configured to discharge the process gas or the purge gas from an outflow port of the reactor.
<18> The gas recovery device according to <17>,
   wherein the gas feed pipe has a gas feed branch pipe that branches into two parts, the gas feed branch pipe being a first gas feed branch pipe configured to feed the process gas and a second gas feed branch pipe configured to feed the purge gas,
   wherein the gas discharge pipe has a gas discharge branch pipe that branches into two portions, the gas discharge branch pipe being a first gas discharge branch pipe configured to discharge the process gas and a second gas discharge branch pipe configured to discharge the purge gas, and
   wherein the gas recovery device further comprises: a feed gas switching valve configured to shut off the first gas feed branch pipe or the second gas feed branch pipe; and a discharge gas switching valve configured to shut off the first gas discharge branch pipe or the second gas discharge branch pipe.

### Effects of Invention

According to this invention, it is possible to provide a reactor and a gas recovery device that allows the processing gas containing the capturing target gas to easily flow through the cells in the outer periphery, can increase an amount of a capturing target gas recovered, and can extend the lifespan.

### BRIEF DESCRIPTION OF THE DRAWINGS

FIG. 1A is a schematic view of a cross section of a honeycomb structure making up a reactor according to an embodiment of this invention, which is parallel to an extending direction of the cells;
FIG. 1B is a schematic view of the cross sectional of the honeycomb structure taken along the line a-a' in FIG. 1A;
FIG. 1C is a schematic view for explaining a flow direction of a process gas in the honeycomb structure in FIG. 1A;
FIG.2A is a schematic view of a cross section of a honeycomb structure making up a reactor according to an embodiment of this invention, which is parallel to an extending direction of the cells;
FIG. 2B is a schematic view of a side surface of the honeycomb structure in FIG. 2A;
FIG.3A is a schematic view of a cross section of a honeycomb structure making up a reactor according to an embodiment of this invention, which is parallel to an extending direction of the cells;
FIG. 3B is a schematic view of a side surface of the honeycomb structure in FIG. 3A;
FIG. 4 is a schematic view of a cross section of a honeycomb structure making up a reactor according to another embodiment of this invention, which is parallel to an extending direction of the cells;
FIG.5A is a schematic view of a cross section of a honeycomb structure making up a reactor according to an embodiment of this invention, which is parallel to an extending direction of the cells;
FIG. 5B is a schematic cross-sectional view of the honeycomb structure taken along the line b-b' in FIG. 5A;
FIG. 6A is a schematic view of a cross section of a cylindrical member and a honeycomb structure making up a reactor according to another embodiment of this invention, which is parallel to an extending direction of the cells;
FIG. 6B is a schematic cross-sectional view of the cylindrical member and the honeycomb structure taken along the line c-c' in FIG. 6A; and
FIG. 7 is a schematic view of a structure of a gas recovery device according to an embodiment of the invention.

### DETAILED DESCRIPTION OF THE INVENTION

A reactor according to this invention includes at least one honeycomb structure having an outer peripheral wall and partition walls provided on an inner side of the outer peripheral wall, the partition walls defining a plurality of cells through which a process gas containing a capturing target gas can flow, each of the cells extending from an inflow end face to an outflow end face of the honeycomb structure, wherein the honeycomb structure has at least one communication pore group comprising a plurality of communication pores provided at the outer peripheral wall and the partition walls so as to be positioned on one straight line orthogonal to an extending direction of the cells, and wherein the communication pore group is located closer to the outflow end face side than a center in the extending direction of the cells. With such a configuration, the reactor according to this invention allows a process gas containing a capturing target gas to easily flow through the cells in the outer peripheral region in the cross section orthogonal to the extending direction of the cells, thereby increasing an amount of the capturing target gas and extending the lifespan of the reactor. Furthermore, when a functional material is supported on the honeycomb structure having such a structure, a difference in the amount of the capturing target gas recovered between the central region and the peripheral region is decreased, so that the functional material in the central region can be prevented from being deteriorated prematurely as compared to the peripheral region, and the amount of heat required when releasing (desorbing) the capturing target gas can be reduced.

A gas recovery device according to this invention is for adsorbing and releasing a capturing target gas contained in a process gas, and includes: the above reactor; a heater configured to heat the reactor; a gas feed pipe configured to feed the process gas or a purge gas to an inflow port of the reactor; and a gas discharge pipe configured to discharge the process gas or the purge gas from an outflow port of the reactor. With such a structure, the gas recovery device according to this invention uses the reactor that can increase the amount of the capturing target gas and extend its lifespan, and therefore can maintain good gas recovery performance for a long period of time. The amount of heating required when releasing (desorbing) the capturing target gas can also be suppressed in the reactor, thus reducing the operating cost.

Hereinafter, embodiments of the invention will be specifically described with reference to the drawings. It should be understood that the invention is not limited to the following embodiments, and those which have appropriately added changes, improvements and the like to the following embodiments based on knowledge of a person skilled in the art without departing from the spirit of the invention fall within the scope of the invention.

### <Reactor>

The reactor according to an embodiment of the invention can be suitably used to recover the capturing target gas contained in the process gas. Non-limiting examples of the process gas include exhaust gases emitted from factories, power plants, and the like, and the atmosphere. Non-limiting examples of the exhaust gas include combustion exhaust gases generated when burning fossil fuels, coal gasification gases made by gasifying coal or natural gases in thermal power plants, steel mills, and other facilities. Non-limiting examples of the trapping target gas include carbon dioxide (CO₂), nitrogen oxides (NOₓ), sulfur oxides (SOₓ), hydrogen sulfide (H₂S) and the like. Among these, the reactor according to an embodiment of the invention is particularly useful for recovering carbon dioxide (CO₂) from combustion exhaust gases and the atmosphere.

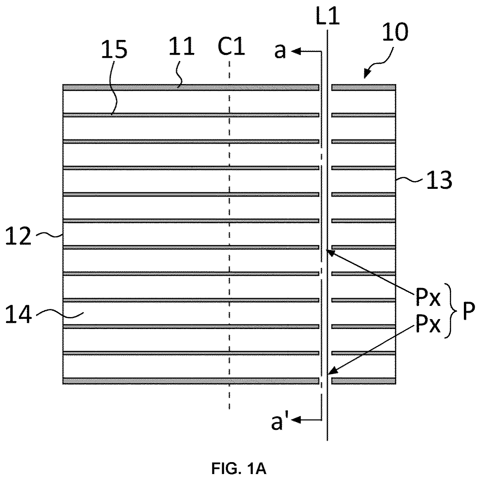

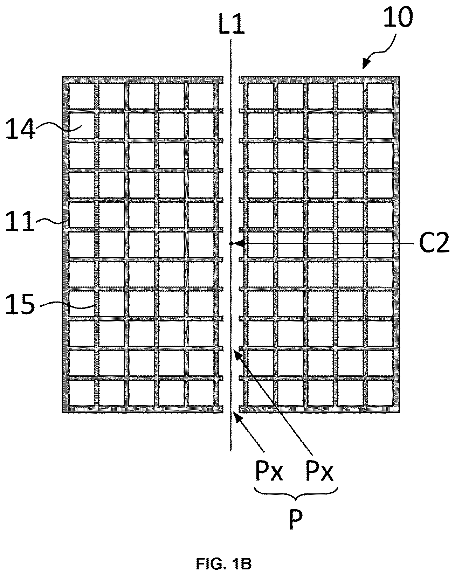

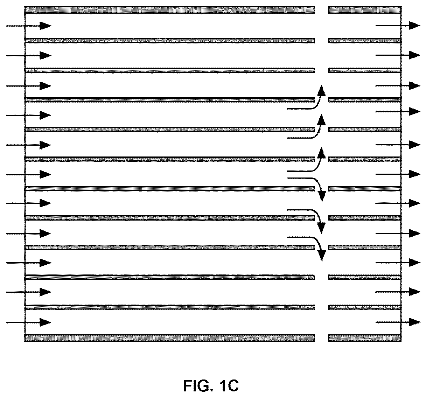

FIG. 1A is a schematic view of a cross section of a honeycomb structure making up a reactor according to an embodiment of this invention, which is parallel to an extending direction of the cells. FIG. 1B is a schematic view of the cross sectional of the honeycomb structure taken along the line a-a' in FIG. 1A. FIG. 1C is a schematic view of the same cross section as FIG. 1A, and is a schematic view for explaining the flow direction of the process gas.

The honeycomb structure 10 itself illustrated in FIGS. 1A and 1B can be used as a reactor. The honeycomb structure 10 has an outer peripheral wall 11 and partition walls 15 provided on an inner side of the outer peripheral wall 11, the partition walls 15 defining a plurality of cells 14, each of the cells 14 extending from an inflow end face 12 to an outflow end face 13 of each honeycomb structure. The cells 14 can allow a process gas containing a capturing target gas to flow therethrough. The honeycomb structure 10 has at least one communication pore group P composed of a plurality of communication pores Px provided at the outer peripheral wall 11 and the partition walls 15 so as to be positioned on one straight line L1 orthogonal to an extending direction of the cells 14. The communication pore group P is located closer to the outflow end face 13 than a center C1 in the extending direction of the cells 14.

By providing the communication pore group P as described above, as illustrated in FIG. 1C, the process gas flowing through the cells 14 in the central region can easily flow through the cells 14 in the peripheral region through the communication pores Px provided at the partition walls 15 in the central region, thereby reducing the difference in the amount of the process gas flowing between the cells 14 in the central region and the cells 14 in the peripheral region. As used herein, the peripheral region means the region in the cross section between the outer edge of the peripheral wall 11 and a position that is 1/2^{1/2} of the diameter of the honeycomb structure 10 from the center of the honeycomb structure 10 toward the peripheral wall 11. The central region means the region other than the peripheral region in the cross section.

Furthermore, when the communication pore group P is located on the inflow end face 12 rather than the center C1 in the extending direction of the cells 14, the processing gas flowing through the cells 14 in the central region cannot be sufficiently diffused to the cells 14 in the peripheral region.

It is preferable that the communication pores Px of the communication pore group P are arranged so that in a cross section of the honeycomb structure 10 orthogonal to the extending direction of the cells 14, as illustrated in FIG. 1B, one straight line orthogonal to the extending direction of the cells 14 passes through a center C2 of the honeycomb structure 10. By providing the communication pores Px of the communication pore group P in this manner, the effect of allowing the process gas flowing through the cells 14 in the central region to flow through the cells 14 in the outer peripheral region is enhanced.

The number of the communication pore groups P provided in the honeycomb structure 10 is not particularly limited, but it is preferably two or more, and more preferably three or more. The number of the communication pore groups P to the above range can increase the effect of allowing the process gas flowing through the cells 14 in the central region to flow through the cells 14 in the outer peripheral region. The upper limit of the number of the communication pore groups P is not particularly limited, but it may be, for example, 10 or less from the viewpoint of suppressing the reduction of the strength of the honeycomb structure 10.

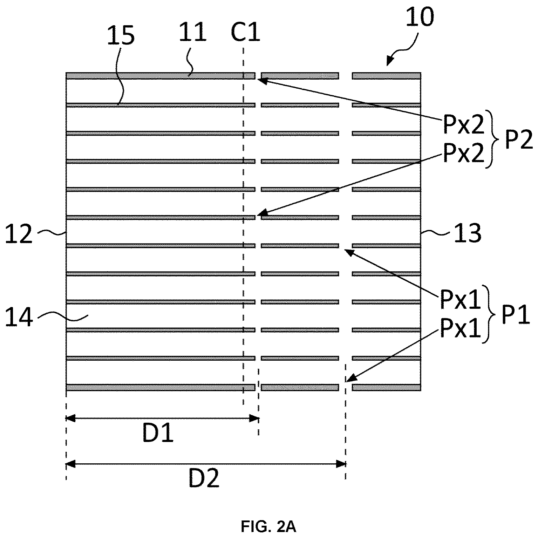

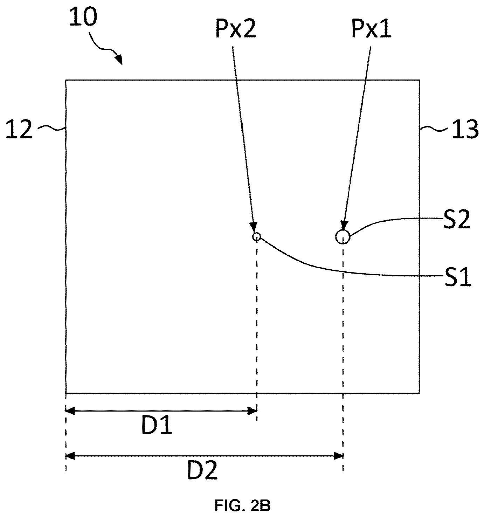

As an example of the honeycomb structure 10 having two or more communication pore groups P, FIG. 2A illustrates a schematic view of the cross section of the honeycomb structure 10 having the two communication pore groups P, which is parallel to the extending direction of the cells 14. Moreover, FIG. 2B illustrated a schematic view of the side surface of that honeycomb structure.

As shown in FIG. 2A, in the honeycomb structure 10 having the two or more communication pore groups P, the diameter of the communication pore Px1 of the communication pore group P1 closest to the outflow end face 13 is larger than that of the communication pore Px2 of the communication pore group P2 closest to the inflow end face 12. Such a structure can suppress a decrease in strength of the honeycomb structure 10, while further enhancing the effect of allowing the process gas flowing through the cells 14 in the central region to flow through the cells 14 in the peripheral region. In particular, as the position of the communication pore group P1 is closer to the outflow end face 13, the effect of diffusing the processing gas to the cells 14 in the outer peripheral region is higher. Therefore, by increasing the diameter of the communication pore Px1 of the communication pore group P1 closest to the outflow end face 13, the processing gas flowing through the cells 14 in the central region can be efficiently allowed to flow through the cells 14 in the outer peripheral region.

As used herein, the diameter of the communication pore Px (Px1, Px2) means the diameter of the through hole on a surface or cross section parallel to the extending direction of the cells 14 of the outer peripheral wall 11 or the partition walls 15. For example, the diameter of the communication pore Px (Px1, Px2) formed in the outer peripheral wall 11 can be identified from the surface of the outer peripheral wall 11 of the honeycomb structure 10 as shown in FIG. 2.

The shape of the communication pore Px is not particularly limited, and it may be a circle, as well as a polygon such as an ellipse and a rectangle. If the shape of the communication pore portion Px is not circular, the diameter of the communication pore Px means the diameter of the largest inscribed circle inscribed in the shape of the communication pore Px.

In the honeycomb structure 10 having two or more communication pore groups P, it is preferable to satisfy the relationship: S2 / S1 ≤ 10 × D2 / D1, in which D1 is a distance between the center of the communication pore Px2 of the communication pore group P2 closest to the inflow end face 12 and the inflow end face 12, S1 is a cross-sectional area of the communication pore Px2 of the communication pore group P2 closest to the inflow end face 12, D2 is a distance between the center of the communication pore portion Px1 of the communication pore group P1 closest to the outflow end face 13 and the inflow end face 12, and S2 is a cross-sectional area of the communication pore Px1 of the communication pore group P1 closest to the outflow end face 13. By satisfying such a relationship, it is possible to stably improve the effect of allowing the process gas flowing through the cells 14 in the central region to flow through the cells 14 in the peripheral region while suppressing a decrease in the strength of the honeycomb structure 10.

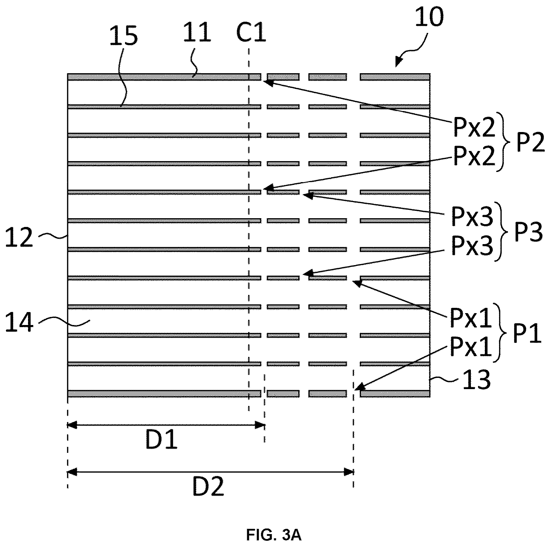

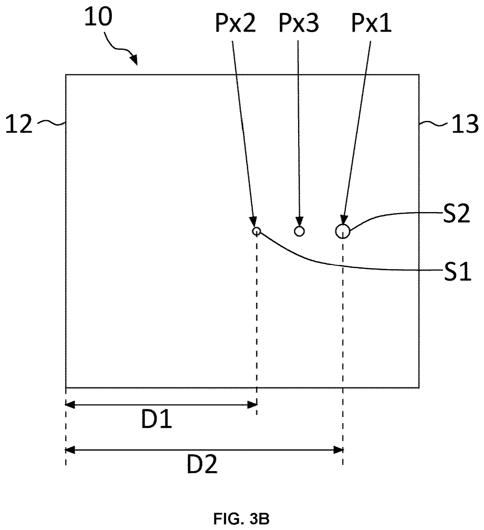

As an example of the honeycomb structure 10 having three or more communication pore groups P, FIG. 3A illustrates a schematic view of the cross section of the honeycomb structure 10 having three communication pore groups P, which is parallel to the extending direction of the cells 14. Moreover, FIG. 3A illustrates a schematic view of the side surface of that honeycomb structure.

As shown in FIG. 3A, in the honeycomb structure 10 having three or more communication pore groups P, the diameter of the communication pore portion Px2 of the communication pore group P2 closest to the inflow end face 12 is preferably smaller than that of the communication pore Px3 of the other communication pore group P3, and the diameter of the communication pore Px1 of the communication pore group P1 closest to the outflow end face 13 is preferably larger than that of the communication pore portion Px3 in the other communication pore group P3. Such a structure can suppress a decrease in strength of the honeycomb structure 10, while further enhancing the effect of allowing the process gas flowing through the cells 14 in the central region to flow through the cells 14 in the peripheral region. In particular, the position of the communication pore group P1 is closer to the outflow end face 13, the effect of diffusing the processing gas to the cells 14 in the peripheral region is higher. Therefore, by decreasing the diameter of the communication pore Px2 of the communication pore group P2 closest to the inflow end face 12 and increasing the diameter of the communication pore Px1 of the communication pore group P1 closest to the outflow end face 13, the processing gas flowing through the cells 14 in the central region can be efficiently allowed to flow through the cells 14 in the peripheral region.

In the honeycomb structure 10 having three or more communication pore groups P, it is preferable to satisfy the relationship: S2 / S1 ≤ 10 × D2 / D1, in which D1 is a distance between the center of the communication pore Px2 of the communication pore group P2 closest to the inflow end face 12 and the inflow end face 12, S1 is a cross-sectional area of the communication pore Px2 of the communication pore group P2 closest to the inflow end face 12, D2 is a distance between the center of the communication pore Px1 of the communication pore group P1 closest to the outflow end face 13 and the inflow end face 12, and S2 is a cross-sectional area of the communication pore Px1 of the communication pore group P1 closest to the outflow end face 13. By satisfying such a relationship, it is possible to stably improve the effect of allowing the process gas flowing through the cells 14 in the central region to flow through the cells 14 in the peripheral region while suppressing a decrease in the strength of the honeycomb structure 10.

The reactor may include two or more honeycomb structures 10. By providing the two or more honeycomb structures 10, the amount of the capturing target gas can be increased.

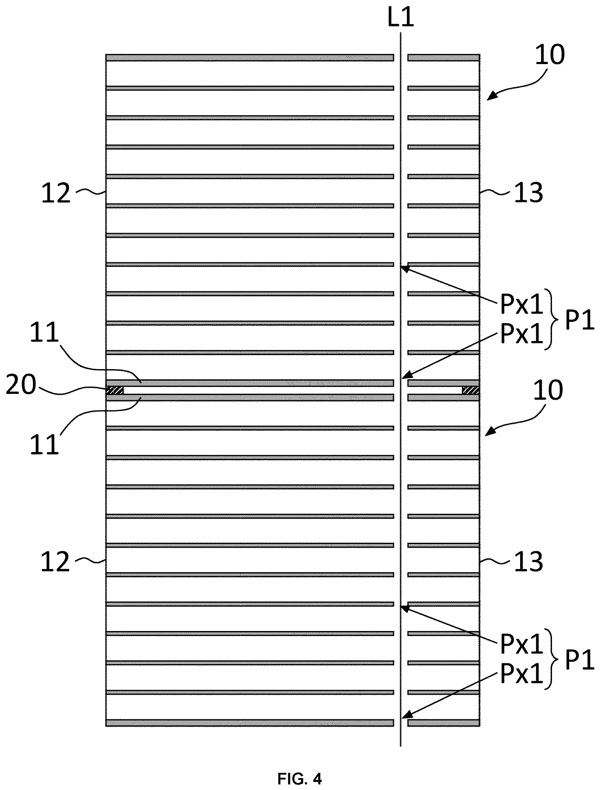

Here, as an example of the reactor having the two or more honeycomb structures 10, a reactor having two honeycomb structures 10 will be described. FIG. 4 is a schematic view of a cross section of the honeycomb structure 10 making up this reactor, which is parallel to an extending direction of the cells 14.

As illustrated in FIG. 4, the honeycomb structures 10 is provided so that the outer peripheral walls 11 parallel to the extending direction of the cells 14 face each other. Furthermore, the communication pores Px of the communication pore group P in the two or more honeycomb structures 10 are positioned on one straight line L1 orthogonal to the extending direction of the cells 14. By adopting such a configuration, regardless of the state where the honeycomb structure 10 making up the reactor is provided in the flow path of the process gas containing the capturing target gas, the difference in the amount of the process gas flowing between the central region and the peripheral region in the cross section orthogonal to the flow path direction can be reduced.

The two or more honeycomb structures 10 may have the peripheral walls 11 parallel to the extending direction of the cells 14 being in direct contact with each other, but, as illustrated in FIG. 4, a spacer 20 or the like may be disposed between the peripheral walls 11 parallel to the extending direction of the cells 14.

Next, the details of the honeycomb structures 10, which make up the reactor, will be described.

The shape of the honeycomb structure is not particularly limited as long as the honeycomb structure has the above features. For example, the outer shape of the cross section orthogonal to the extending direction of the cells 14 of the honeycomb structure 10 can be a polygon such as a triangle, quadrangle, hexagon and octagon, and a round shape such as a circle, an ellipse, an oval, an egg shape, an elongated circular shape, and a rounded quadrangle (a quadrangle consisting of a curved line as a whole, in which each side and corner is curved, and a radius of curvature of each side is greater than that of each corner). Among these, the shape of the honeycomb structure 10 preferably has quadrangular outer shapes of the cross section and the end faces (inflow end face 12 and outflow end face 13) (i.e., the shape of the honeycomb structure 10 is a quadrangular pillar shape).

In a preferable embodiment, the honeycomb structure 10 has a quadrangular pillar shape with a length of one side of the inflow end face 12 and the outflow end face 13 of 100 to 500 mm (preferably 200 to 400 mm) and a length of the extending direction of the cells 14 of 100 to 1000 mm (preferably 300 to 500 mm). With the honeycomb structure 10 having this size, a sufficient amount of the functional material supported on the cells 14 can be ensured, so that practicality as a reactor can be ensured.

The shape of each cell 14 is not particularly limited, but it may be polygon such as a triangle, quadrangle, hexagon, and octagon, and a round shape such as a circle, an ellipse, an oval, an egg shape, and an elongated circular shape, in the cross section of the honeycomb structure 10 orthogonal to the extending direction of the cells 14. The shape of each cell may be alone or in combination of two or more. Moreover, among these shapes of each cell, the quadrangle or the hexagon is preferable. By providing each cell having such a shape, it is possible to reduce the pressure loss when the process gas flows. It should be noted that the shape of each cell in the cross section is the same as that of each cell at the end faces.

The material of the honeycomb structure 10 (the outer peripheral wall 11 and the partition walls 15) is not particularly limited, but from the viewpoint of ensuring the strength of the honeycomb structure, they may contain one or more materials selected from cordierite, mullite, alumina, silica silicon carbide, and Si-bonded silicon carbide as main components. As used herein, the term "main component" means a component in which a proportion in the total component is more than 50% by mass.

The thickness of the partition walls 15 is not particularly limited, but from the viewpoints of ensuring the strength of the honeycomb structures 10 and reducing the pressure loss when the process gas passes through the cells 14, it may preferably be 0.05 mm to 5 mm, more preferably 0.10 mm to 4.5 mm, and even more preferably 0.15 mm to 4 mm.

Further, the "thickness of the partition walls 15" as used herein refers to a length of a line segment across the partition wall 15 when the centers of gravity of adjacent cells 14 are connected by the line segment in a cross section of the honeycomb structure 10 orthogonal to the extending direction of the cells 14. The thickness of the partition walls 15 refers to an average value of the thicknesses of all the partition walls 15.

The porosity of the partition walls 15 is not particularly limited, but from the viewpoints of ensuring the strength of the honeycomb structure and reducing the pressure loss when the process gas passes through the cells 14, it may preferably be 30% or more and less than 80%, more preferably 35% to 75%, and even more preferably 40% to 70%.

It should be noted that the "porosity of the partition walls 15" as used herein means a porosity measured using the mercury intrusion technique in accordance with JIS R1655: 2003.

The average pore diameter of the partition walls 15 is not particularly limited, but from the viewpoints of ensuring the strength of the honeycomb structure and reducing the pressure loss when the process gas passes through the cells 14, it may preferably be 10 µm to 300 µm, more preferably 15 µm to 280 µm, and even more preferably 20 µm to 260 µm.

The "average pore diameter of the partition walls 15" as used herein means the pore diameter of the partition walls 15 at 50% of an integrated value in a pore distribution determined by the mercury intrusion method in accordance with JIS R1655: 2003.

The thickness of the outer peripheral wall 11 is not particularly limited, but from the viewpoints of ensuring the strength of the honeycomb structures 10 and the like, it may preferably be 0.05 mm to 10 mm, more preferably 0.20 mm to 8 mm, and even more preferably 0.30 mm to 6 mm.

As used herein, the thickness of the outer peripheral wall 11 refers to a length, in a normal line direction of a side surface of the honeycomb structure 10, from a boundary between the outer peripheral wall 11 and the outermost cell 14 or partition wall 15 to the outer peripheral surface of the honeycomb structure 10 in the cross section of the honeycomb structure 10 orthogonal to the extending direction of the cells 14.

The cell density of the honeycomb structure is not particularly limited, but from the viewpoint of ensuring the strength of the honeycomb structures 10 and increasing the amount of the functional material 30 supported, it may preferably be 0.05 cells/cm² to 25 cells/cm², more preferably from 0.1 cells/cm² to 20 cells/cm², and even more preferably 0.5 cells/cm² to 15 cells/cm².

As used herein, the "cell density" refers a value obtained by dividing a number of cells by an area of one end face (the total area of the partition walls 15 and the cells 14, excluding the outer peripheral wall 11) of the honeycomb structure 10.

The reactor can further include a functional material supported on the partition walls 15 of the honeycomb structure 10. The functional material can also be supported on the outer peripheral wall 11 facing the cells 14. By supporting the functional material, it is possible to recover (adsorb) and release (desorb) the capturing target gas from the process gas.

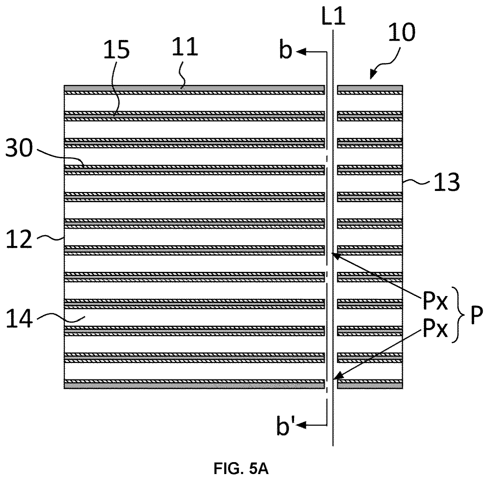

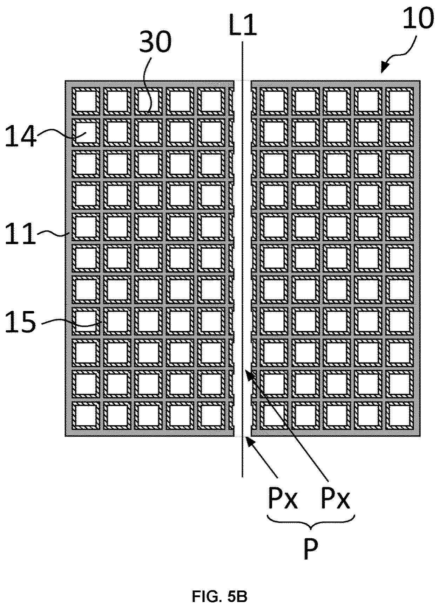

Here, FIG. 5A is a schematic view of a cross section of the honeycomb structure that supports the functional material, which is parallel to the extending direction of the cells. FIG. 5B also illustrates a schematic view of a cross section of the honeycomb structure taken along the line b-b' in FIG. 5A.

In the honeycomb structures 10 illustrated in FIGS. 5A and 5B, a functional material 30 is supported on the partition walls 15 and the outer peripheral wall 11 facing the cells 14.

The method for supporting the functional material 30 is not particularly limited, but it is sufficient to form the layer containing the functional material 30 on the partition walls 15 and the outer peripheral wall 11 facing the cells 14 of the honeycomb structures 10.

The functional material 30 is not limited as long as it is capable of recovering the trapping target gas contained in the process gas, and for example, the adsorbent for the capturing target gas can be used. By using the adsorbent as the functional material 30, the trapping target gas can be adsorbed and recovered, and the recovered gas can be easily desorbed by changing conditions such as temperatures.

The adsorbent may be appropriately selected according to the type of the trapping target gas, and is not particularly limited. Examples of the adsorbent effective for adsorption of the trapping target gas such as carbon dioxide (CO₂) include amine compounds, organometallic complexes, nanoporous ceramics or mesoporous silica on which the amine compounds and/or the organometallic complexes are supported. These can be used alone or in combination of two or more.

Non-limiting examples of the amine compounds include monoethanolamine (MEA), N-methyldiethanolamine (MDEA) and the like.

Non-limiting examples of the organometallic complexes include porous metal organic frameworks (MOFs) that have a structure capable of adsorbing the trapping target gas in the pores.

Among the various adsorbents listed above, the amine compounds and/or the metal organic frameworks are preferred. These adsorbents can be used to stably improve the adsorption of the capturing target gas such as carbon dioxide (CO₂).

The thickness of the layer containing the functional material may be determined according to the size of the cells 14, and is not particularly limited. For example, from the viewpoint of ensuring sufficient contact with air, the thickness of the layer containing the functional material is preferably 20 µm or more, more preferably 25 µm or more, and even more preferably 30 µm or more. On the other hand, from the viewpoint of suppressing separation of the layer containing the functional material from the partition walls 15 and the outer peripheral wall 11, the thickness of the layer containing the functional material is preferably 400 µm or less, more preferably 380 µm or less, and even more preferably 350 µm or less.

The reactor can use the honeycomb structures 10 themselves as a reactor, but it can also be further provided with a cylindrical member that houses the honeycomb structures 10.

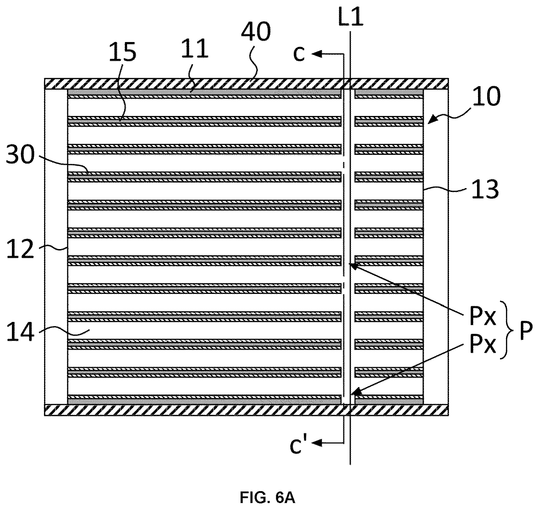

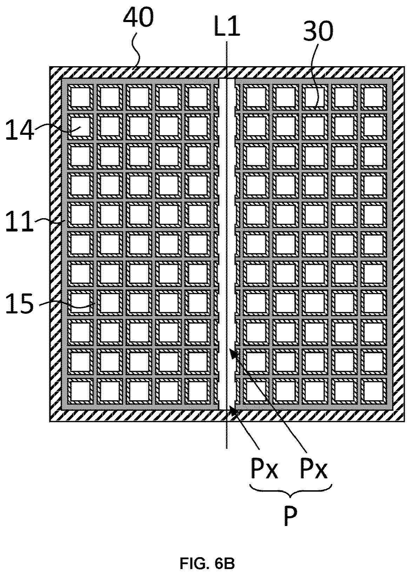

Here, FIG. 6A illustrates a schematic view of the cross section of the honeycomb structures housed in the cylindrical member, which is parallel to the extending direction of the cells. Also, FIG. 6B illustrates a schematic view of the cross section of the honeycomb structure taken along the line b-b' in FIG. 6A.

As illustrated in FIG. 6A and 6B, the reactor includes the honeycomb structure(s) 10 and a cylindrical member 40 that houses the honeycomb structure 10. By housing the honeycomb structures 10 in the cylindrical member 40, the honeycomb structures 10 can be protected from external shocks.

In FIGS. 6A and 6B, the honeycomb structure 10 and the cylindrical member 40 are in direct contact with each other, but another member such as an insulating material may be placed between the honeycomb structure 10 and the cylindrical member 40.

The cylindrical member 40 is preferably made of a metal in terms of manufacturability, although not particularly limited thereto. Examples of the material of the cylindrical member 40 that can be used herein include stainless steel, titanium alloys, copper alloys, aluminum alloys, brass and the like. Among them, the stainless steel is preferable because it has high durability and reliability and is inexpensive.

### <Method for Producing Reactor>

The method for producing the reactor according to an embodiment of the invention is not particularly limited as long as it is a method capable of making the structure as described above.

For example, a method for producing the reactor according to an embodiment of this invention includes a step (step A) of producing a honeycomb structure 10 having an outer peripheral wall 11 and partition walls 15 provided on an inner side of the outer peripheral wall 11, the partition walls 15 defining a plurality of cells 14 each extending from an inflow end face 12 to an outflow end face 13 of the honeycomb structure 10, and a step (step B) of forming at least one communication pore group P composed of a plurality of communication pores Px in the outer peripheral wall 11 and partition walls 15 of the honeycomb structure 10.

In the step A, the method for producing the honeycomb structures 10 is not particularly limited, and it can be carried out in accordance with a known method in the art. For example, the honeycomb structures 10 can be produced as follows:
First, a green body containing ceramic powder is extruded into a desired shape to prepare a honeycomb formed body. At this time, the shape and density of each cell, and shapes and thicknesses of the outer peripheral wall 15 and the partition walls 11, and the like, can be controlled by selecting dies and jigs in appropriate forms. As the ceramic powder, powder of the above-described ceramics or raw material powder that will become the above-described ceramics after firing (for example, cordierite-forming raw materials) can be used. The cordierite-forming raw materials are raw materials that will form cordierite by firing. The cordierite-forming raw materials may preferably have a chemical composition of 30 to 45% by mass of alumina (Al₂O₃) (including the proportion of aluminum hydroxide that is converted to alumina), 11 to 17% by mass of magnesia (MgO) and 42 to 57% by mass of silica (SiO₂). The green body can also contain a binder, a pore former, a dispersant, water, an organic solvent and the like. The porosity and average pore size of the partition walls 15 can be controlled by selecting the type and amount of the ceramic powder, binder, pore former and dispersant to be used, as needed.

The honeycomb formed body obtained above can be then dried and fired to obtain the honeycomb structure 10. Non-limiting examples of the drying method include known drying methods such as hot air drying, microwave drying, dielectric drying, drying under reduced pressure, drying in vacuum, and freeze drying. Among these, a drying method that combines the hot air drying with the microwave drying or dielectric drying is preferable because the entire honeycomb formed body can be rapidly and uniformly dried.

Subsequently, in the step B, at least one communication pore group P is formed at a predetermined position of the honeycomb structure 10 obtained above. The method for forming the communication pore group P is not particularly limited, but for example, laser processing or the like can be used. By using the laser processing, it is possible to easily form at least one communication pore group P at a predetermined position without deforming the honeycomb structure 10.

The conditions for the laser processing are not particularly limited and may be appropriately adjusted depending on the type of laser processing machine used.

In addition to the above steps, the method for producing the reactor according to an embodiment of this invention can further include a step of supporting the functional material 30 on the partition walls 15 of the honeycomb structure 10 and the like. This step may be performed at any stage after the step A. Typically, this step is performed after the step B.

Although the method for supporting the functional material is not particularly limited, it can be formed, for example, by the following steps. The honeycomb structure 10 is immersed in a slurry containing the functional material, an organic binder, and a dispersion medium for a predetermined period of time, and an excess slurry on the end faces and the outer periphery of the honeycomb structure 10 is removed by blowing and wiping. The dispersion medium can be water, an organic solvent (e.g., toluene, xylene, ethanol, n-butanol, ethyl acetate, butyl acetate, terpineol, dihydroterpineol, texanol, ethylene glycol monobutyl ether acetate, diethylene glycol monoethyl ether acetate, diethylene glycol monoethyl ether, diethylene glycol monobutyl ether acetate, diethylene glycol monobutyl ether) or a mixture thereof. The slurry can be then dried to support the functional material on each surface of the partition walls 15 and the like. The drying may be performed while heating the honeycomb structure 10 to a temperature of about 120 to 600°C, for example. Although a series of steps of immersion, slurry removal, and drying may be performed only once, the steps can be repeated multiple times to support a desirable amount of the functional material.

The method for producing the reactor according to an embodiment of this can further include, in addition to the above steps, a step of housing the honeycomb structure(s) 10 in the cylindrical member 40.

The method for housing the honeycomb structure(s) 10 in the cylindrical member 40 is not particularly limited, and any known method can be used. Such a method includes, but not limited to, fitting such as clearance fitting, interference fitting and shrinkage fitting, as well as brazing, welding, diffusion bonding, and the like.

### <Gas Recovery Device>

The gas recovery device according to an embodiment of the invention can be suitably used to recover and release the trapping target gas contained in the process gas.

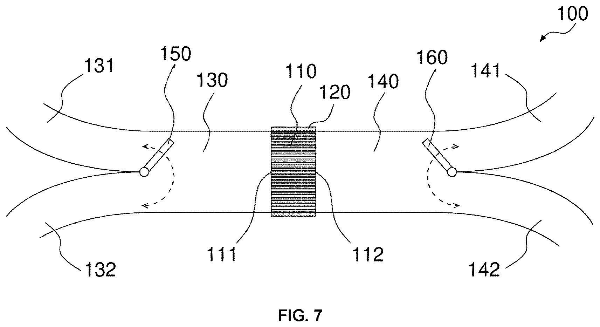

FIG. 7 is a schematic view of the gas recovery device according to an embodiment of the invention.

As shown in FIG. 7, a gas recovery device 100 includes: a reactor 110; a heater 120 configured to heat the reactor; a gas feed pipe 130 configured to feed the process gas or a purge gas to an inflow port 111 of the reactor 110; and a gas discharge pipe 140 configured to discharge the process gas or the purge gas from an outflow port 112 of the reactor 110. For the reactor 110, the above reactor is used, which allows the process gas containing the capturing target gas to easily flow into the cells 14 in the outer peripheral region, and which can increase the amount of the capturing target gas and extend the life of the reactor. Therefore, the gas recovery system 100 can maintain good gas recovery performance over a long period of time. When the above reactor supports the functional material 30, the amount of heating when releasing (desorbing) the capturing target gas can also be reduced, thus reducing the operating cost of the gas recovery system 100.

The gas feed pipe 130 has a gas feed branch pipe that branches into two parts. The gas feed branch pipe can be a first gas feed branch pipe 131 configured to feed the process gas and a second gas feed branch pipe 132 configured to feed the purge gas.

The gas discharge pipe 140 has a gas discharge branch pipe that branching into two parts. The gas discharge branch pipe can be a first gas discharge branch pipe 141 configured to discharge the process gas and a second gas discharge branch pipe 142 configured to discharge the purge gas.

The gas recovery device 100 can further include a feed gas switching valve 150 configured to shut off the first gas feed branch pipe 131 or the second gas feed branch pipe 132, and a discharge gas switching valve 160 configured to shut off the first gas discharge branch pipe 141 or the second gas discharge branch pipe 142.

In the gas recovery device 100 having the above structure, when recovering the trapping target gas contained in the process gas, the feed gas switching valve 150 is switched to shut off the second gas feed branch pipe 132 and open the first gas feed branch pipe 131, and the discharge gas switching valve 160 is switched to shut off the second gas discharge branch pipe 142 and open the first gas discharge branch pipe 141. The process gas containing the trapping target gas is then fed from the first gas feed branch pipe 131 to the inflow port 111 of the reactor 110 via the gas feed pipe 130. The process gas fed to the reactor 110 is discharged from the outflow port 112 after the trapping target gas is recovered. The discharged process gas is discharged from the first gas discharge branch pipe 141 via the gas discharge pipe 140.

Subsequently, when the trapping target gas that has been recovered in the reactor 110, the feed gas switching valve 150 is switched to open the second gas feed branch pipe 132 and shut off the first gas feed branch pipe 131, and the discharge gas switching valve 160 is switched to open the second gas discharge branch pipe 142 and shut off the first gas discharge branch pipe 141. The purge gas is then fed from the second gas feed branch pipe 132 to the inflow port 111 of the reactor 110 via the gas feed pipe 130. In this case, the reactor 110 is heated by the heater 120. The purge gas fed to the reactor 110 is discharged from the outflow port 112 together with the trapping target gas captured in the functional material 30 of the reactor 110. The purge gas containing the trapping target gas is discharged from the second gas discharge branch pipe 142 via the gas discharge pipe 140.

As used herein, the "purge gas" means a gas that can desorb the trapping target gas captured in the functional material 30 of the reactor 110 and discharge it from the reactor 110. The purge gas may be appropriately selected depending on the type of the trapping target gas. For example, when the trapping target gas is carbon dioxide, water vapor or the like may be used. The water vapor is preferably heated at 100°C or higher (e.g., 120°C) in the reactor 110 by heating with the heater 120.

### Description of Reference Numerals

10 honeycomb structure
11 outer peripheral wall
12 inflow end face
13 outflow end face
14 cell
15 partition wall
20 spacer
30 functional material
40 cylindrical member
100 gas recovery device
110 reactor
111 inflow port
112 outflow port
120 heater
130 gas feed pipe
131 first gas feed branch pipe
132 second gas feed branch pipe
140 gas discharge pipe
141 first gas discharge branch pipe
142 second gas discharge branch pipe
150 feed gas switching valve
160 discharge gas switching valve
Px, Px1, Px2, Px3 communication pore
P, P1, P2, P3 communication pore group

## Claims

1. A reactor comprising at least one honeycomb structure having an outer peripheral wall and partition walls provided on an inner side of the outer peripheral wall, the partition walls defining a plurality of cells through which a process gas containing a capturing target gas can flow, each of the cells extending from an inflow end face to an outflow end face of the honeycomb structure,
wherein the honeycomb structure has at least one communication pore group comprising a plurality of communication pores provided at the outer peripheral wall and the partition walls so as to be positioned on one straight line orthogonal to an extending direction of the cells, and
wherein the communication pore group is located closer to the outflow end face side than a center in the extending direction of the cells.

2. The reactor according to claim 1, wherein, in a cross section of the honeycomb structure orthogonal to the extending direction of the cells, the communication pores of the communication pore group are provided so that the one straight line orthogonal to the extending direction of the cells passes through the center of the honeycomb structure.

3. The reactor according to claim 1 or 2,
wherein the honeycomb structure has two or more communication pore groups, and
wherein a diameter of each of the communication pores of the communication pore group closest to the outflow end face is larger than that of each of the communication pores of the communication pore group closest to the inflow end face.

4. The reactor according to claim 1 or 2,
wherein the honeycomb structure has three or more communication pore groups,
wherein a diameter of each of the communication pores of the communication pore group closest to the inflow end face is smaller than that of each of the communication pores of the other communication pore groups, and
wherein a diameter of each of the communication pores of the communication pore group closest to the outflow end face is larger than that of each of the communication pores of the other communication pore groups.

5. The reactor according to claim 3, wherein the reactor satisfies the relationship: S2 / S1 ≤ 10 × D2 / D1, in which D1 is a distance between a center of the communication pore of the communication pore group closest to the inflow end face and the inflow end face, S1 is a cross-sectional area of the communication pore of the communication pore group closest to the inflow end face, D2 is a distance between a center of the communication pore of the communication pore group closest to the outflow end face and the inflow end face, and S2 is a cross-sectional area of the communication pore of the communication pore group closest to the outflow end face.

6. The reactor according to claim 4, wherein the reactor satisfies the relationship: S2 / S1 ≤ 10 × D2 / D1, in which D1 is a distance between a center of the communication pore of the communication pore group closest to the inflow end face and the inflow end face, S1 is a cross-sectional area of the communication pore of the communication pore group closest to the inflow end face, D2 is a distance between a center of the communication pore of the communication pore group closest to the outflow end face and the inflow end face, and S2 is a cross-sectional area of the communication pore of the communication pore group closest to the outflow end face.

7. The reactor according to claim 1 or 2, wherein the reactor comprises two or more of the honeycomb structure,
wherein the two or more of the honeycomb structure are provided so that the outer peripheral walls parallel to an extending direction of the cells face each other, and
wherein the communicating pores of the communication pore group in the two or more of the honeycomb structure are located on the one straight line orthogonal to an extending direction of the cells.

8. The reactor according to claim 1 or 2, wherein the honeycomb structure has a rectangular pillar shape.

9. The reactor according to claim 1 or 2, wherein each of the cells has a quadrangular or hexagonal shape in a cross section of each of the honeycomb structure orthogonal to the extending direction of the cells.

10. The reactor according to claim 1 or 2, wherein the honeycomb structure comprises at least one selected from cordierite, mullite, alumina, silicon carbide, and Si-bonded silicon carbide as a main component.

11. The reactor according to claim 1 or 2, wherein the partition walls have a thickness of 0.05 to 5 mm.

12. The reactor according to claim 1 or 2, wherein the partition walls have a porosity of 30% or more and less than 80%.

13. The reactor according to claim 1 or 2, wherein the partition walls have an average pore diameter of 10 to 300 µm.

14. The reactor according to claim 1 or 2, further comprising a functional material supported on the partition walls.

15. The reactor according to claim 14, wherein the functional material is an amine compound and/or a metal organic framework.

16. The reactor according to claim 1 or 2, further comprising a cylindrical member that houses the honeycomb structure.

17. A gas recovery device for adsorbing and releasing a capturing target gas contained in a process gas, the gas recovery device comprising:
the reactor according to claim 1 or 2;
a heater configured to heat the reactor;
a gas feed pipe configured to feed the process gas or a purge gas to an inflow port of the reactor; and
a gas discharge pipe configured to discharge the process gas or the purge gas from an outflow port of the reactor.

18. The gas recovery device according to claim 17,
wherein the gas feed pipe has a gas feed branch pipe that branches into two parts, the gas feed branch pipe being a first gas feed branch pipe configured to feed the process gas and a second gas feed branch pipe configured to feed the purge gas,
wherein the gas discharge pipe has a gas discharge branch pipe that branches into two portions, the gas discharge branch pipe being a first gas discharge branch pipe configured to discharge the process gas and a second gas discharge branch pipe configured to discharge the purge gas, and
wherein the gas recovery device further comprises: a feed gas switching valve configured to shut off the first gas feed branch pipe or the second gas feed branch pipe; and a discharge gas switching valve configured to shut off the first gas discharge branch pipe or the second gas discharge branch pipe.
